# EUROPÄISCHE PATENTSCHRIFT

(11) **EP 1 910 861 B1**
(45) Veröffentlichungstag und Bekanntmachung des Hinweises auf die Patenterteilung: **30.05.2012**
(21) Anmeldenummer: 06763857.7
(22) Anmeldetag: 22.06.2006
(51) Int. Cl.: G01S 17/08, G01S 7/481, G01S 17/36, G01S 7/497

(54) **ENTFERNUNGSMESSGERÄT**
DISTANCE-MEASURING DEVICE
APPAREIL DE TELEMETRIE

(30) Priorität: 27.07.2005 DE 102005035101
(43) Veröffentlichungstag der Anmeldung: 16.04.2008
(73) Patentinhaber: ROBERT BOSCH GMBH, 70442 Stuttgart (DE)
(72) Erfinder: SKULTETY-BETZ, Uwe, 70771 Leinfelden-Echterdingen (DE); HAASE, Bjoern, 70182 Stuttgart (DE); STIERLE, Joerg, 71111 Waldenbuch (DE); WOLF, Peter, 70771 Leinfelden-Echterdingen (DE); PAHUD, Cédric, CH-1110 Morges (CH); RENZ, Kai, 70771 Leinfelden-Echterdingen (DE); SCHULTE, Clemens, 70197 Stuttgart (DE)
(86) Internationale Anmeldenummer: PCT/EP2006/063464
(87) Internationale Veröffentlichungsnummer: WO 2007/012526

(56) Entgegenhaltungen:
- US-A1- 2002 057 883
- US-A1- 2003 218 737
- GREGG J FOKKEN ET AL: "Low-Cost, Multi-GHz Electrical Packaging for Serial Optoelectronic Links Utilizing Vertical Cavity Surface Emitting Lasers" IEEE TRANSACTIONS ON ADVANCED PACKAGING, IEEE SERVICE CENTER, PISCATAWAY, NJ, US, Bd. 23, Nr. 1, Februar 2000 (2000-02), XP011002216 ISSN: 1521-3323

## Beschreibung

### Stand der Technik

Die Erfindung geht aus von einem Entfernungsmessgerät, insbesondere einem als Handgerät ausgebildeten Laserentfernungsmessgerät, nach dem Oberbegriff des Anspruchs 1.

Aus der EP 1 351 070 A1 ist ein Entfernungsmessgerät bekannt, mit einer Leiterplatte, an welcher eine Laserdiode zum Erzeugen eines Messsignals und eine Fotodiode zum Empfangen eines Messsignals befestigt sind. Diese umfassen jeweils ein Gehäuse, welches eine für ein Messsignal durchlässige Glasdecke aufweist.

### Vorteile der Erfindung

Die Erfindung geht aus von einem Entfernungsmessgerät, insbesondere einem als Handgerät ausgebildeten Laserentfernungsmessgerät, mit einer Leiterplatte und einer Sende- oder Empfangseinheit, die zum Senden oder Empfangen eines Messsignals vorgesehen ist, und ein Gehäuse umfasst, das eine der Leiterplatte zugewandte Bodenfläche, eine Seitenfläche und eine Signalfläche aufweist.

Es wird vorgeschlagen, dass die Seitenfläche als Signalfläche ausgebildet ist. Es kann vorteilhaft ein seitliches Senden oder Empfangen eines Messsignals durch das Gehäuse der Sende- bzw. Empfangseinheit erreicht werden. Besonders vorteilhaft kann ein Senden oder Empfangen eines Messsignals, das parallel zur Leiterplatte ausgerichtet ist, mit einem einfachen Aufbau erreicht werden. Um eine hohe Stabilität der Sende- oder Empfangseinheit zu erreichen, kann die Bodenfläche an der Leiterplatte anliegen. Zusätzlich kann die Bodenfläche direkt an der Leiterplatte befestigt sein. Das Gehäuse kann stoffschlüssig direkt an der Leiterplatte befestigt sein, wodurch eine sichere elektrische Verbindung mit der Leiterplatte über die Stoffschlussverbindung zusätzlich erzielt werden kann. Die Bodenfläche ist vorzugsweise als ebene Fläche ausgebildet. Diese kann vorteilhafterweise parallel zur Leiterplatte ausgerichtet sein. Unter einer "Seitenfläche" soll in diesem Zusammenhang eine Fläche des Gehäuses verstanden werden, die von der Bodenfläche und von einer der Bodenfläche gegenüber angeordneten Deckfläche verschieden ist. Vorzugsweise bilden die Bodenfläche und die Seitenfläche einen Winkel zwischen 30° und 120°. Ferner soll unter einer "Signalfläche" eine Fläche verstanden werden, die in einem Pfad für ein Messsignal angeordnet ist. Die Sende- oder Empfangseinheit kann vorzugsweise zum Senden oder Empfangen eines sichtbaren Lichtstrahls vorgesehen sein. Die Sendeeinheit ist vorteilhafterweise als Laserdiode ausgeführt, wie z.B. als VCSEL-Diode (Vertical Cavity Surface Emitting Laser), d.h. als oberflächenemittierender Laser mit vertikalem Hohlraum. Alternativ ist eine Ausbildung der Sende- oder Empfangseinheit als Sende- bzw. Empfangsmittel für weitere elektromagnetische Strahlungen, wie z.B. Infrarot-, Radarstrahlungen usw., oder Ultraschall-Wellen denkbar.

Vorteilhafterweise weist das Gehäuse zumindest zwei Materialschichten auf, wobei über eine Grenzfläche zwischen den Materialschichten eine elektrische Verbindung hergestellt ist. Es können dadurch vorteilhaft interne elektrische Anschlüsse des Gehäuses einfach und mit einem kompakten Aufbau des Gehäuses hergestellt werden. Die Grenzfläche kann von einer Anlagefläche, mit welcher eine Materialschicht an einer benachbarten Materialschicht anliegt, gebildet sein. Das Gehäuse kann vorteilhaft eine Schichtung mehrerer Materialschichten aufweisen, die in einer Aufschichtrichtung auf mehreren Schichtniveaus aufgeschichtet sind. Unter "Aufschichtrichtung" soll eine Richtung verstanden werden, die quer zur Schichtrichtung, insbesondere senkrecht zur Schichtrichtung, ausgerichtet ist. Auf einem Schichtniveau kann eine Materialschicht angeordnet sein. Alternativ können mehrere Materialschichten auf einem Schichtniveau angeordnet sein, die aneinander grenzen. Über eine Grenzfläche zwischen zwei Materialschichten kann eine elektrische Verbindung auf einem Schichtniveau oder zwischen zwei benachbarten Schichtniveaus hergestellt werden. Zur Herstellung einer elektrischen Verbindung ist die Grenzfläche vorzugsweise mit einem leitenden Element beschichtet, wie z.B. eine Lötlegierung.

Vorteilhafterweise weist die Sende- oder Empfangseinheit einen Diodenchip auf, der auf zumindest zwei Schichtniveaus jeweils mit einer Grenzfläche elektrisch verbunden ist. Dadurch können elektrische Anschlüsse des Diodenchips erreicht werden, die effektiv, z.B. durch zumindest eine Schichtdicke, voneinander elektrisch isoliert sind.

Weist das Gehäuse eine Lötfläche auf, die mit einer Grenzfläche elektrisch verbunden ist, kann bei einem direkten Löten des Gehäuses an der Leiterplatte eine sichere elektrische Anbindung der Sende- oder Empfangseinheit an die Leiterplatte mit geringem Aufwand erreicht werden. Es können außerdem externe elektrische Anschlusselemente zur elektrischen Kontaktierung, wie z.B. beinförmige Anschlusspins, vermieden werden, wodurch eine kompakte Ausgestaltung der Sende- oder Empfangseinheit erzielt werden kann. Zusätzlich kann eine gute Abdichtung eines Innenraums des Gehäuses nach außen erreicht werden, da ein Durchführen externer elektrischer Anschlüsse in den Innenraum durch das Gehäuse vermieden werden kann. Unter "Lötfläche" soll insbesondere eine Außenfläche des Gehäuses verstanden werden, die zu einem Löten des Gehäuses an die Leiterplatte mit einem Lötmittel beschichtet ist.

In diesem Zusammenhang wird ferner vorgeschlagen, dass die Lötfläche in Aufschichtrichtung von einer Grenzfläche begrenzt ist. Wenn das Gehäuse mit mehreren Lötflächen versehen ist, über welche eine elektrische Verbindung jeweils mit einer Grenzfläche auf einem Schichtniveau hergestellt ist, kann dadurch eine effektive elektrische Isolierung zwischen den Grenzflächen erreicht werden.

In einer Ausführungsvariante weist das Gehäuse eine Ausnehmung mit einer Lötfläche auf. Bei einem Löten des Gehäuses an die Leiterplatte kann ein unerwünschtes Ausbreiten eines Lötmittels vermieden werden, indem das Lötmittel z.B. bei einer Aufschmelzlötung einen durch die Ausnehmung und die Leiterplatte begrenzten Raum füllt. Wenn die Lötfläche in Aufschichtrichtung begrenzt ist, kann eine unerwünschte Kontaktierung eines Schichtniveaus über Grenzen der Lötfläche hinaus aufgrund eines Ausbreitens des Lötmittels vorteilhaft vermieden werden.

In einer vorteilhaften Weiterbildung der Erfindung wird vorgeschlagen, dass die Sende- oder Empfangseinheit ein Befestigungsmittel aufweist, das zum Befestigen einer von der Bodenfläche und von der Signalfläche verschiedenen Außenfläche an der Leiterplatte vorgesehen ist. Dadurch kann ein Anwendungsbereich der Sende- oder Empfangseinheit im Bezug auf eine Orientierung des Messsignals relativ zur Leiterplatte vorteilhaft erweitert werden. Weist das Gehäuse zumindest zwei als Lötflächen ausgebildete Befestigungsmittel auf, die auf zwei aneinander grenzenden Außenflächen angeordnet sind, kann diese Flexibilität einfach erreicht werden, wobei eine kompakte Ausgestaltung der Sende- oder Empfangseinheit zusätzlich erzielt werden kann. Die aneinander grenzenden Außenflächen sind vorteilhafterweise relativ zueinander angewinkelt.

Ferner wird vorgeschlagen, dass die Sende- oder Empfangseinheit ein Umlenkmittel zum Umlenken des Messsignals aufweist, das in dem Gehäuse angeordnet ist. Dadurch kann eine gesteigerte Präzision von Entfernungsmessungen, die für Objekte in einem Nahbereich durchgeführt werden und bei denen das Messsignal z.B. mit einem Parallaxenwinkel relativ zur Leiterplatte ausgerichtet ist, einfach und mit einem kompakten Aufbau erzielt werden.
In diesem Zusammenhang kann ein Herstellaufwand der Sende- oder Empfangseinheit einfach dadurch reduziert werden, dass das Umlenkmittel einstückig an das Gehäuse angeformt ist. Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Entfernungsmessgerät, mit einer Leiterplatte, einer Sendeeinheit und einer Empfangseinheit,
- Fig. 2: die Sendeeinheit mit einem an der Leiterplatte befestigten Gehäuse,
- Fig. 3: ein alternatives Gehäuse der Sendeeinheit in einer perspektivischen Ansicht,
- Fig. 4: die Sendeeinheit mit dem Gehäuse aus Figur 3 auf der Leiterplatte in einer Teilschnittansicht,
- Fig. 5: eine Kontaktstelle des Gehäuses aus Figur 3,
- Fig. 6: die Sendeeinheit mit dem Gehäuse aus Figur 3 auf der Leiterplatte in einer Draufsicht,
- Fig. 7: ein alternatives Gehäuse mit drei Ausnehmungen,
- Fig. 8: die Sendeeinheit mit einem alternativen Gehäuse mit Lötflächen,
- Fig. 9: die Empfangseinheit mit einem Umlenkmittel und
- Fig. 10: die Empfangseinheit mit einem alternativen Umlenkmittel.

### Beschreibung der Ausführungsbeispiele

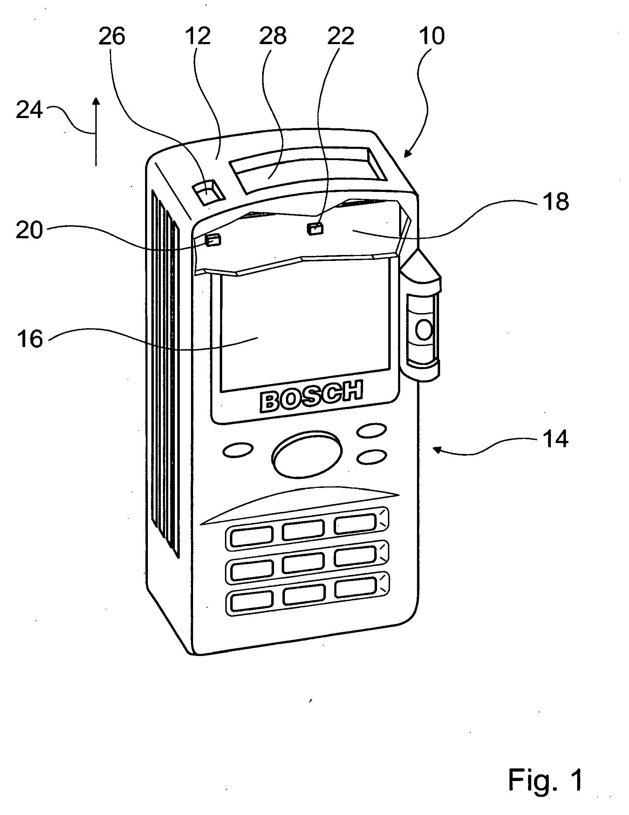

Figur 1 zeigt ein als Laserentfernungsmessgerät 10 ausgeführtes Entfernungsmessgerät. Dieses weist ein Gehäuse 12, Betätigungselemente 14 zum Ein- und Ausschalten des Entfernungsmessgeräts, zum Starten bzw. Konfigurieren eines Messvorgangs sowie einen Display 16 auf. Innerhalb des Gehäuses 12 ist eine Leiterplatte 18 angeordnet, an welcher eine als Laserdiode ausgebildete Sendeeinheit 20 und eine als Fotodiode ausgebildete Empfangseinheit 22 befestigt sind. Zur Messung eines Abstands des Laserentfernungsmessgeräts 10 zu einem entfernten Gegenstand wird im Betrieb des Laserentfernungsmessgeräts 10 ein Sendemesssignal unter der Form eines Lichtstrahls von der Sendeeinheit 20 in einer parallel zur Leiterplatte 18 ausgerichteten Strahlrichtung 24 über eine Sendeoptik 26 gesendet. Das von einer Oberfläche des entfernten Gegenstands reflektierte Sendemesssignal wird über eine Empfangsoptik 28 als Empfangsmesssignal von der Empfangseinheit 22 empfangen. Aus einem Vergleich des Sendemesssignals mit dem Empfangsmesssignal kann der gesuchte Abstand ermittelt werden.

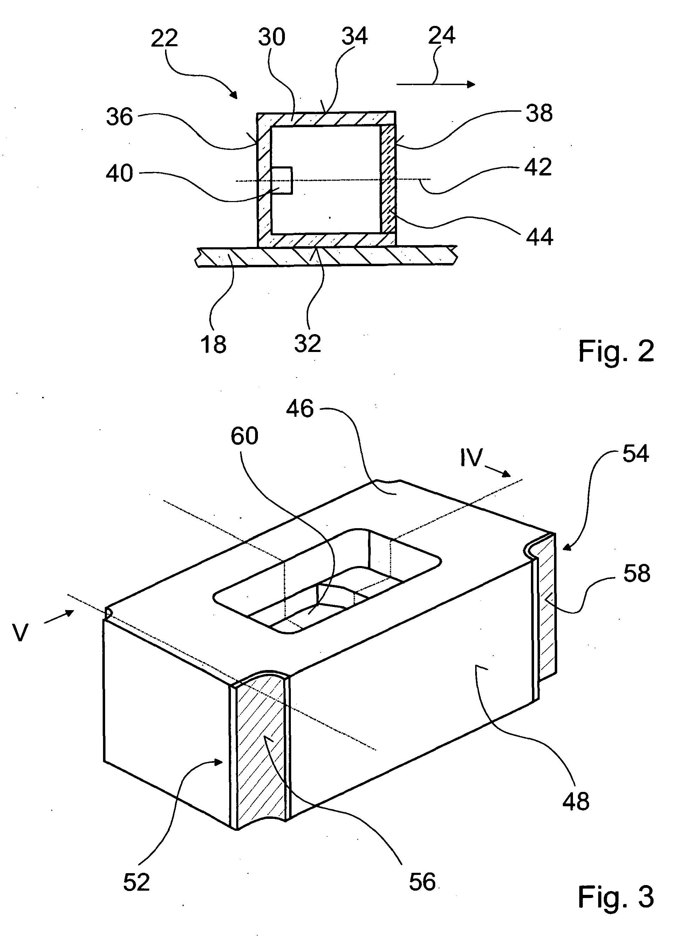

Die Leiterplatte 18 und die Empfangseinheit 22 sind in einer Schnittansicht in Figur 2 dargestellt. Die Empfangseinheit 22 umfasst ein Gehäuse 30, das eine an der Leiterplatte 18 gelötete Bodenfläche 32, eine gegenüber der Bodenfläche 32 angeordnete Deckfläche 34, eine erste Seitenfläche 36 und eine als Signalfläche 38 ausgeführte zweite Seitenfläche aufweist, sowie einen im Gehäuse 30 angeordneten Diodenchip 40 zum Empfangen des Empfangsmesssignals. Die Signalfläche 38 ist auf einer parallel zur Leiterplatte 18 orientierten optischen Achse 42 für das Empfangsmesssignal angeordnet und ist von einer für das Empfangsmesssignal durchlässigen Glasdecke 44 gebildet.

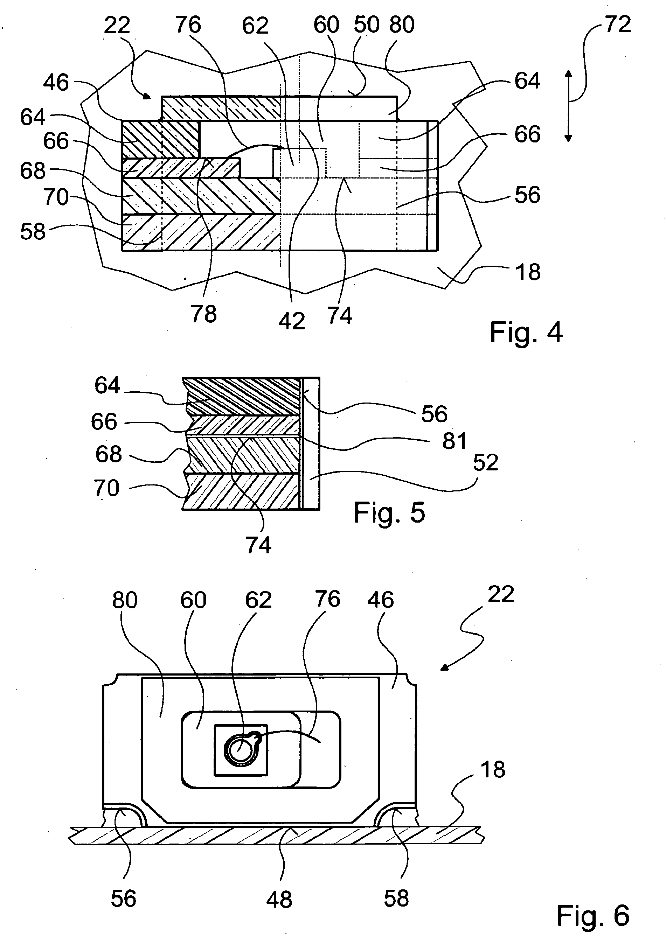

Eine weitere Ausführungsform eines Gehäuses 46 der Empfangseinheit 22 ist in einer perspektivischen Ansicht in Figur 3 dargestellt. Im montierten Zustand der Empfangseinheit 22 auf der Leiterplatte 18 ist, wie in Figur 6 gezeigt, eine Bodenfläche 48 des Gehäuses 46 an der Leiterplatte 18 befestigt. Das Gehäuse 46 umfasst außerdem eine in Figur 4 dargestellte als Signalfläche 50 ausgebildete Seitenfläche. Zum Löten der Bodenfläche 48 an die Leiterplatte 18 ist das Gehäuse 46 mit zwei Ausnehmungen 52, 54 versehen, die jeweils eine Lötfläche 56 bzw. 58 umfassen. Die Lötflächen 56, 58 sind jeweils mit einer Lötlegierung beschichtet, die durch eine Schraffur schematisch dargestellt ist. Bei einer Befestigung der Empfangseinheit 22 an der Leiterplatte 18 wird, wie in Figur 6 gezeigt, bei einer Aufschmelzlötung ein durch die Ausnehmung 52 bzw. 54 und die Leiterplatte 18 begrenzter Raum durch die Lötlegierung gefüllt. Das Gehäuse 46 weist außerdem eine Vertiefung 60 auf, in der ein in Figur 4 dargestellter Diodenchip 62 im zusammengebauten Zustand der Empfangseinheit 22 angeordnet ist.

Die Empfangseinheit 22 mit dem Gehäuse 46 ist in ihrem zusammengebauten Zustand und auf der Leiterplatte 18 montiert in einer Teilschnittansicht in Figur 4 dargestellt. Das Gehäuse 46 weist vier Materialschichten 64, 66, 68, 70 auf, die in einer Aufschichtrichtung 72 aufgeschichtet sind. Die Materialschichten 64, 66, 68, 70 bestehen aus Keramik. In der Vertiefung 60 ist der Diodenchip 62 angeordnet, der an einer Grenzfläche 74 gelötet ist. Der Diodenchip 62 ist über die Lötverbindung mit der Grenzfläche 74 elektrisch verbunden. Des Weiteren ist der Diodenchip 62 mit einer Grenzfläche 78 ebenfalls elektrisch verbunden, und zwar über einen Bonddraht 76, der an den Diodenchip 62 einerseits und an die Grenzfläche 78 andererseits gelötet ist. Zur Lötung des Diodenchips 62 und des Bonddrahts 76 weist die Grenzfläche 74 bzw. 78 eine Lötlegierung auf. Diese Lötlegierung ist, wie in Figur 5 in Detail dargestellt, in Kontakt mit der Lötfläche 56 bzw. 58, so dass eine elektrische Verbindung zwischen der Grenzfläche 74 bzw. 78 und der Lötfläche 56 bzw. 58 hergestellt ist. Hiermit ist der Diodenchip 62 mit der Leiterplatte 18 über die Grenzfläche 74 und die Lötfläche 56 auf einem ersten Schichtniveau einerseits und über die Grenzfläche 78 und die Lötfläche 58 auf einem zweiten Schichtniveau andererseits mit der Leiterplatte 18 elektrisch verbunden. Die Vertiefung 60 ist von einer Glasdecke 80, welche die Signalfläche 50 bildet, nach außen isoliert. In einer Ausführungsvariante kann das Gehäuse 46 aus einem einteiligen Kunststoffteil hergestellt werden, das mit einem Stanzgitter versehen ist. In diesem Fall weist das Gehäuse 46 Materialschichten auf, die in einer Aufschichtrichtung auf mehrere Schichtniveaus aufgeschichtet sind, wobei die Aufschichtrichtung parallel zu einer der Gitterachsen ausgerichtet ist. Benachbarte Materialschichten auf zwei verschiedenen Schichtniveaus und/oder innerhalb eines Schichtniveaus können aneinander mit einer Grenzfläche anliegen, wobei eine Grenzfläche von Grenzflächen elementarer Gitterzellen gebildet ist. Das Stanzgitter ist vorzugsweise aus einem leitenden Material hergestellt, so dass ein interner elektrischer Anschluss im Gehäuse 46 und ein elektrischer Anschluss mit einer Lötfläche zum Löten des Gehäuses 46 an die Leiterplatte 18 über das Stanzgitter hergestellt werden können.

Figur 5 zeigt eine weitere Schnittansicht des Gehäuses 46. Zu erkennen sind die Materialschichten 64, 66, 68, 70 und die Ausnehmung 52 mit der Lötfläche 56. Die Grenzfläche 74, auf welcher der Diodenchip 62 gelötet ist (Figur 4), ist mit einer Lötlegierung beschichtet, die unter der Materialschicht 66 bis zu einer Kontaktstelle 81 mit der Lötfläche 56 durchgängig ist.

Figur 6 zeigt die Anordnung der Empfangseinheit 22 mit dem Gehäuse 46 auf der Leiterplatte 18 in einer Draufsicht.

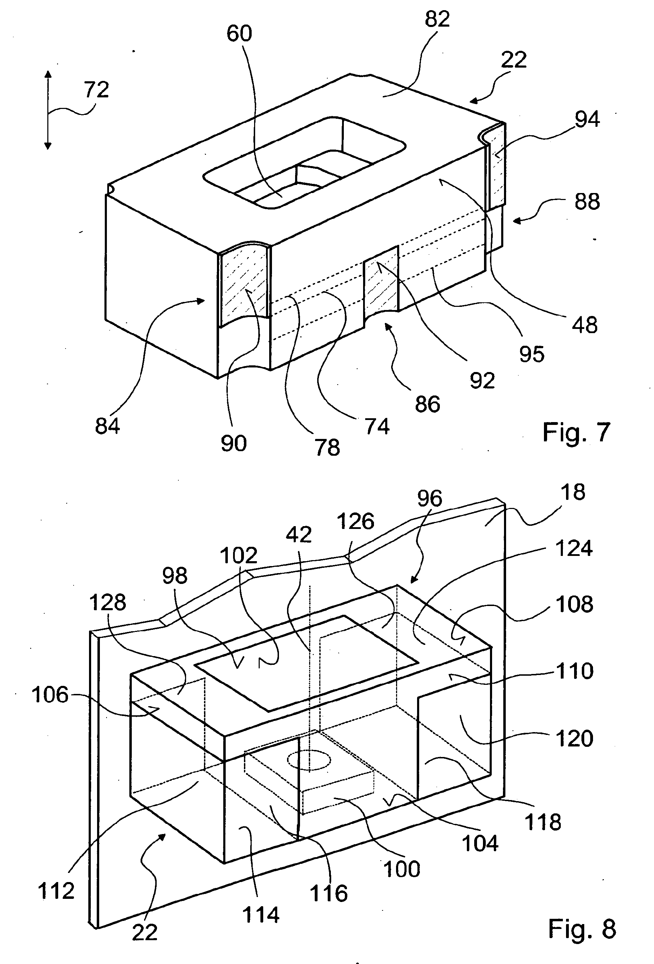

Eine alternative Ausführung eines Gehäuses 82 der Empfangseinheit 22 ist in Figur 7 in einer perspektivischen Ansicht gezeigt. Die folgende Beschreibung beschränkt sich auf die Unterschiede in dem Aufbau der Gehäuse 46 und 82. Für identische Teile der Gehäuse 46 und 82 werden keine neuen Bezugszeichen vergeben. Das Gehäuse 82 weist drei Ausnehmungen 84, 86, 88 auf, die jeweils eine Lötfläche 90, 92, 94 zum Löten der Bodenfläche 48 an die Leiterplatte 18 umfassen. Im montierten Zustand der Empfangseinheit 22 an der Leiterplatte 18 ist eine elektrische Verbindung zwischen der Leiterplatte 18 und dem Diodenchip 62 über die Lötflächen 90, 94 und die Grenzflächen 74, 78 auf zwei Schichtniveaus hergestellt, und zwar auf die Art und Weise, die anhand der Figuren 4 und 5 bereits beschrieben wurde. Über eine Grenzfläche 95 auf einem in Aufschichtrichtung 72 tieferliegenden dritten Schichtniveau, die mit dem Diodenchip 62 einerseits und der Lötfläche 92 anderseits elektrisch verbunden ist, ist ein Massenanschluss des Diodenchips 62 an die Leiterplatte 18 hergestellt. Um eine effektive elektrische Isolierung zwischen dem tieferliegenden Schichtniveau und den oberen Schichtniveaus zu erreichen, sind die Lötfläche 92 von der Grenzfläche 78 einerseits und die Lötflächen 90, 94 von der Grenzfläche 74 andererseits in Aufschichtrichtung 72 begrenzt.

In Figur 8 ist die Empfangseinheit 22 mit einer weiteren Ausführungsform eines Gehäuses 96 schematisch dargestellt. Dieses weist eine Signalfläche 98, die für ein von einem Diodenchip 100 empfangenes Messsignal durchlässig ist, und eine Bodenfläche 102 auf, die an der Leiterplatte 18 gelötet ist. Außerdem umfasst das Gehäuse 96 von der Bodenfläche 102 und der Signalfläche 98 verschiedene Außenflächen 104, 106, 108, 110. Die Bodenfläche 102 und die Außenflächen 104, 106, 108, 110 sind mit als Lötflächen ausgebildeten Befestigungsmitteln 112, 114, 116, 118, 120, 124, 126, 128 versehen. In einer Montagevariante kann eine der Außenflächen 104, 106, 108, 110 mit Hilfe eines der Befestigungsmittel 112, 114, 116, 118, 120, 124, an die Leiterplatte 18 gelötet werden, wodurch eine verschiedene Ausrichtung eines von dem Diodenchip 100 erzeugten Messsignals relativ zur Leiterplatte 18 erzielt werden kann.

In allen bereits beschriebenen Ausführungsbeispielen sind die Sendeeinheit 20 und die Empfangseinheit 22 sowohl in ihrem Aufbau als auch in der Art und Weise, mit der sie an der Leiterplatte 18 befestigt werden, identisch. Für entsprechende Teile der Sendeeinheit 20 und der Empfangseinheit 22 werden keine neuen Bezugszeichen vergeben.

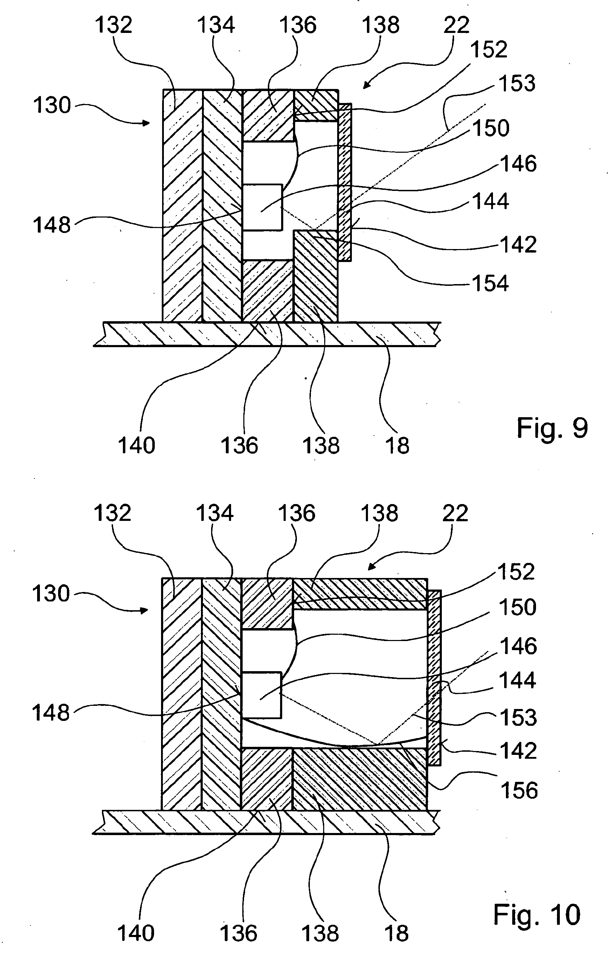

In Figur 9 ist eine alternative Ausführungsform eines Gehäuses 130 der Empfangseinheit 22 in einer Schnittansicht dargestellt. Das Gehäuse 130, das mehrere Materialschichten 132, 134, 136, 138 aufweist, ist mit einer Bodenfläche 140 an die Leiterplatte 18 gelötet. Eine Seitenfläche des Gehäuses 130 ist als Signalfläche 142 ausgebildet und ist von einer für das Empfangsmesssignal durchlässigen Glasdecke 144 gebildet. Alternativ ist denkbar, dass auf die Glasdecke 144 verzichtet wird oder dass die Signalfläche 142 von einer Vergussmasse gebildet ist. Im Gehäuse 130 angeordnet ist ein Diodenchip 146 an eine Grenzfläche 148 gelötet. Wie oben für die Empfangseinheit 22 anhand der Figur 4 beschrieben, ist der Diodenchip 146 mit der Grenzfläche 148 einerseits und über einen Bonddraht 150 mit einer Grenzfläche 152 elektrisch verbunden. Die Grenzflächen 148, 152 sind jeweils mit in der Figur nicht gezeigten Lötflächen des Gehäuses 130 elektrisch verbunden, über welche das Gehäuse 130 an die Leiterplatte 18 gelötet ist. Dadurch ist der Diodenchip 146 an die Leiterplatte 18 elektrisch angeschlossen. Bei einer Entfernungsmessung eines in einem Nahbereich angeordneten Gegenstands kann ein als Lichtstrahl 153 ausgebildetes Empfangsmesssignal mit einem Parallaxenwinkel relativ zur Leiterplatte 18 auf die Signalfläche 142 fallen. Um ein Empfangen eines solchen Empfangsmesssignals durch den Diodenchip 146 zu erlauben, ist die Empfangseinheit 22 mit einem Umlenkmittel 154 versehen. Dieses ist von einem Fortsatz der Materialschicht 138 gebildet, der gegebenenfalls mit einem Reflektiermittel beschichtet ist.

In Figur 10 ist eine Ausführungsvariante der Empfangseinheit 22 dargestellt. Diese weist ein Umlenkmittel 156 auf, das in dem Gehäuse 130 angeordnet ist.

In einem weiteren Ausführungsbeispiel ist die Sendeeinheit 20 in der Art und Weise aufgebaut und an der Leiterplatte 18 befestigt, die oben für die Empfangseinheit 22 beschrieben ist.

## Patentansprüche

1. Entfernungsmessgerät, insbesondere als Handgerät ausgebildetes Laserentfernungsmessgerät (10) , mit einer Leiterplatte (18) und einer Sende- oder Empfangseinheit (20, 22), die zum Senden oder Empfangen eines Messsignals vorgesehen ist und ein Gehäuse (30, 46, 82, 96, 130) umfasst, das eine der Leiterplatte (18) zugewandte Bodenfläche (32, 48, 102, 140), eine Seitenfläche und eine Signalfläche (38, 50, 98, 142) aufweist, wobei die Signalfläche eine Fläche ist, die in einem Pfad für ein Messsignal angeordnet ist und die Seitenfläche als Signalfläche (38, 50, 98, 142) ausgebildet ist, **dadurch gekennzeichnet, dass** die Empfangseinheit (22) ein Umlenkmittel (154, 156) zum Umlenken des Messsignals aufweist, das in dem Gehäuse (130) so angeordnet ist, dass ein Lichtstrahl (153), der unter einem Parallaxenwinkel aus dem Nahbereich des Entfernungsmessgeräts auf die Signalfläche (142) fällt, auf den Empfänger umgelenkt wird.

2. Entfernungsmessgerät nach Anspruch 1, **dadurch gekennzeichnet, dass** das Gehäuse (46, 82, 130) zumindest zwei Materialschichten (64, 66, 68, 70, 132, 134, 136, 138) aufweist, wobei über eine Grenzfläche (74, 78, 95, 148, 152) zwischen den Materialschichten (64, 66, 68, 70, 132, 134, 136, 138) eine elektrische Verbindung hergestellt ist.

3. Entfernungsmessgerät nach Anspruch 2, **dadurch gekennzeichnet, dass** die Sende- oder Empfangseinheit (20, 22) einen Diodenchip (62, 146) aufweist, der auf zumindest zwei Schichtniveaus jeweils mit einer Grenzfläche (74, 78, 148, 152) elektrisch verbunden ist.

4. Entfernungsmessgerät nach Anspruch 2 oder 3, **dadurch gekennzeichnet, dass** das Gehäuse (46, 82) eine Lötfläche (56, 58, 90, 92, 94) aufweist, die mit einer Grenzfläche (74, 78, 95) elektrisch verbunden ist.

5. Entfernungsmessgerät nach Anspruch 4, **dadurch gekennzeichnet, dass** die Lötfläche (90, 92, 94) in Aufschichtrichtung (72) von einer Grenzfläche (74, 78) begrenzt ist.

6. Entfernungsmessgerät nach einem der vorhergehenden Ansprüche, **dadurch gekennzeichnet, dass** das Gehäuse.(46, 82) eine Ausnehmung (52, 54, 84, 86, 88) mit einer Lötfläche (56, 58, 90, 92, 94) aufweist.

7. Entfernungsmessgerät nach einem der vorhergehenden Ansprüche, **dadurch gekennzeichnet, dass** die Sende- oder Empfangseinheit (20, 22) ein Befestigungsmittel (112, 114, 116, 118, 120, 124) aufweist, das zum Befestigen einer von der Bodenfläche (102) und von der Signalfläche (98) verschiedenen Außenfläche (104, 106, 108, 110) an der Leiterplatte (18) vorgesehen ist.

8. Entfernungsmessgerät nach Anspruch 7, **dadurch gekennzeichnet, dass** das Gehäuse (96) zumindest zwei als Lötflächen ausgebildete Befestigungsmittel (112, 114, 116, 118, 120, 124) aufweist, die auf zwei aneinander grenzenden Außenflächen (104, 106, 108, 110) angeordnet sind.

9. Entfernungsmessgerät nach einem der vorhergehenden Ansprüche, **dadurch gekennzeichnet, dass** die Sende- oder Empfangseinheit (20, 22) ein Umlenkmittel (154, 156) zum Umlenken des Messsignals aufweist, das in dem Gehäuse (130) angeordnet ist.

10. Entfernungsmessgerät nach Anspruch 9, **dadurch gekennzeichnet, dass** das Umlenkmittel (154) einstückig an das Gehäuse (130) angeformt ist.

## Claims

1. Distance measuring device, more particularly laser distance measuring device (10) embodied as a handheld device, comprising a printed circuit board (18) and a transmitting or receiving unit (20, 22), which is provided for transmitting or receiving a measurement signal and comprises a housing (30, 46, 82, 96, 130), which has a base surface (32, 48, 102, 140) facing the printed circuit board (18), a side surface and a signal surface (38, 50, 98, 142), wherein the signal surface is a surface which is arranged in a path for a measurement signal, and the side surface is embodied as a signal surface (38, 50, 98, 142), **characterized in that** the receiving unit (22) has a deflection means (154, 156) for deflecting the measurement signal, which is arranged in the housing (130) such that a light beam (153) incident on the signal surface (142) at a parallax angle from the near region of the distance measuring device is deflected onto the receiver.

2. Distance measuring device according to Claim 1, **characterized in that** the housing (46, 82, 130) has at least two material layers (64, 66, 68, 70, 132, 134, 136, 138), wherein an electrical connection is produced via an interface (74, 78, 95, 148, 152) between the material layers (64, 66, 68, 70, 132, 134, 136, 138).

3. Distance measuring device according to Claim 2, **characterized in that** the transmitting or receiving unit (20, 22) has a diode chip (62, 146) which is electrically connected in each case to an interface (74, 78, 148, 152) on at least two layer levels.

4. Distance measuring device according to Claim 2 or 3, **characterized in that** the housing (46, 82) has a soldering surface (56, 58, 90, 92, 94) which is electrically connected to an interface (74, 78, 95).

5. Distance measuring device according to Claim 4, **characterized in that** the soldering surface (90, 92, 94) is delimited by an interface (74, 78) in a stacking direction (72).

6. Distance measuring device according to any of the preceding claims, **characterized in that** the housing (46, 82) has a cutout (52, 54, 84, 86, 88) with a soldering surface (56, 58, 90, 92, 94).

7. Distance measuring device according to any of the preceding claims, **characterized in that** the transmitting or receiving unit (20, 22) has a fixing means (112, 114, 116, 118, 120, 124) provided for fixing an outer surface (104, 106, 108, 110), different from the base surface (102) and from the signal surface (98), to the printed circuit board (18).

8. Distance measuring device according to Claim 7, **characterized in that** the housing (96) has at least two fixing means (112, 114, 116, 118, 120, 124) which are embodied as soldering surfaces and which are arranged on two outer surfaces (104, 106, 108, 110) adjoining one another.

9. Distance measuring device according to any of the preceding claims, **characterized in that** the transmitting or receiving unit (20, 22) has a deflection means (154, 156) for deflecting the measurement signal, which is arranged in the housing (130).

10. Distance measuring device according to Claim 9, **characterized in that** the deflection means (154) is integrally formed onto the housing (130).

## Revendications

1. Appareil de mesure de distance, en particulier appareil de mesure de distance (10) par laser, configuré comme appareil manuel, présentant
une carte de circuit (18),
une unité d'émission et une unité de réception (20, 22) qui servent à émettre ou recevoir un signal de mesure et un boîtier (30, 46, 82, 96, 130) dont une surface de fond (32, 48, 102, 140) est tournée vers la carte de circuit (18),
une surface latérale et une surface de signal (38, 50, 98, 142), la surface de signal étant une surface disposée dans un parcours de signal de mesure, la surface latérale étant configurée comme surface de signal (38, 50, 98, 142),
**caractérisé en ce que**
l'unité de réception (22) présente un moyen de déviation (154, 156) qui dévie le signal de mesure et qui est disposé dans le boîtier (130) de telle sorte qu'un faisceau lumineux (153) incident sur la surface de signal (142) sous un angle de parallaxe en provenance du voisinage de l'appareil de mesure de distance est dévié sur le récepteur.

2. Appareil de mesure de distance selon la revendication 1, **caractérisé en ce que** le boîtier (46, 82, 130) présente au moins deux couches de matière (64, 66, 68, 70, 132, 134, 136, 138), une liaison électrique étant établie par l'intermédiaire d'une surface frontière (74, 78, 95, 148, 152) située entre les couches de matière (64, 66, 68, 70, 132, 134, 136, 138).

3. Appareil de mesure de distance selon la revendication 2, **caractérisé en ce que** l'unité d'émission et l'unité de réception (20, 22) présentent une puce à diode (62, 146) qui est reliée électriquement à une surface frontière (74, 78, 148, 152) sur au moins deux niveaux de couches.

4. Appareil de mesure de distance selon la revendication 2 ou 3, **caractérisé en ce que** le boîtier (46, 82) présente une surface brasée (56, 58, 90, 92, 94) reliée électriquement à une surface frontière (74, 78, 95).

5. Appareil de mesure de distance selon la revendication 4, **caractérisé en ce que** la surface brasée (90, 92, 94) est délimitée par une surface frontière (74, 78) dans la direction de stratification (72).

6. Appareil de mesure de distance selon l'une des revendications précédentes, **caractérisé en ce que** le boîtier (46, 82) présente une découpe (52, 54, 84, 86, 88) dotée d'une surface brasée (56, 58, 90, 92, 94).

7. Appareil de mesure de distance selon l'une des revendications précédentes, **caractérisé en ce que** l'unité d'émission et l'unité de réception (20, 22) présentent un moyen de fixation (112, 114, 116, 118, 120, 124) qui est prévu pour fixer sur la carte de circuit (18) une surface extérieure (104, 106, 108, 110) différente de la surface de fond (102) et de la surface de signal (98).

8. Appareil de mesure de distance selon la revendication 7, **caractérisé en ce que** le boîtier (96) présente au moins deux moyens de fixation (112, 114, 116, 118, 120, 124) configurés comme surfaces brasées et disposés sur deux surfaces extérieures (104, 106, 108, 110) adjacentes l'une à l'autre.

9. Appareil de mesure de distance selon l'une des revendications précédentes, **caractérisé en ce que** l'unité d'émission et l'unité de réception (20, 22) présentent un moyen de déviation (154, 156) qui dévie le signal de mesure et qui est disposé dans le boîtier (130).

10. Appareil de mesure de distance selon la revendication 9, **caractérisé en ce que** le moyen de déviation (154) est formé d'un seul tenant avec le boîtier (130).
